# EUROPEAN PATENT APPLICATION

(11) **EP 3 940 115 A1**
(43) Date of publication of application: **19.01.2022**
(21) Application number: 19919451.5
(22) Date of filing: 16.09.2019
(51) Int. Cl.: C25B 9/10, C25B 1/10, C25B 13/04, C25B 15/08

(54) **ELECTROLYSIS DEVICE FOR PRODUCING HYDROGEN AND OXYGEN**

(30) Priority: 11.03.2019 KR 20190027310
(71) Applicant: Techwin Co., Ltd., Cheongju-si, Chungcheongbuk-do 28580 (KR)
(72) Inventor: JUNG, Boong Ik, Cheongju-si Chungcheongbuk-do 28582 (KR); KIM, Jung Sik, Sejong 30098 (KR); SHIN, Hyun Su, Daejeon 34390 (KR)
(74) Representative: Krauns, Christian
(86) International application number: PCT/KR2019/011905
(87) International publication number: WO 2020/184796

(57) **Abstract**

Disclosed is an electrolysis device including an electrolytic cell composed of an anode compartment equipped with an anode, a cathode compartment equipped with a cathode, and a diaphragm separating the anode compartment and the cathode compartment from each other. The device further includes an alkaline solution supply unit for supplying an alkaline solution as an electrolyte to the anode compartment, an acidic solution supply unit for supplying an acidic solution as an electrolyte to the cathode compartment, and first and second outlets for discharging electrolyzed water from the anode compartment and the cathode compartment, respectively. In the anode compartment, hydroxide ions of the alkaline solution generate oxygen through an electrode reaction, and, in the cathode compartment, hydrogen ions generate hydrogen through an electrode reaction.

## Description

### Technical Field

The invention relates to an electrolysis device and, more particularly, to an electrolysis device for producing hydrogen and oxygen by electrolyzing an electrolyte.

### Background Art

For water electrolysis, mainly two technologies available: alkaline water electrolysis (AEL), and polymer electrolyte membrane electrolysis (PEMEL).

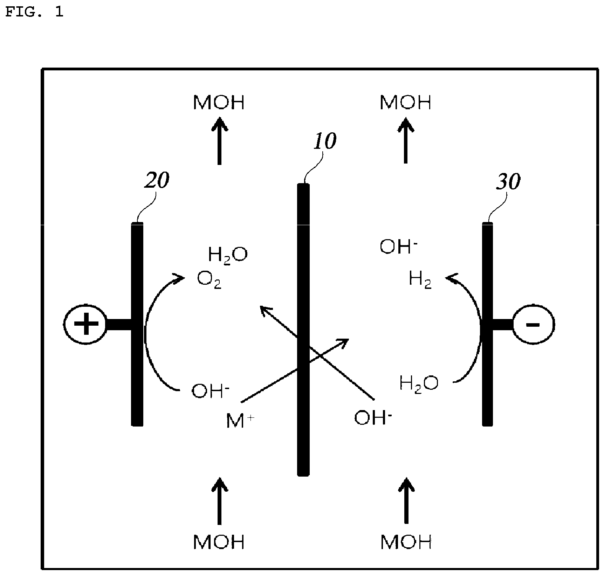

FIG. 1 is a schematic configuration diagram illustrating a conventional alkaline water electrolysis technique. Referring to FIG. 1, the alkaline water electrolysis (AEL) uses an alkaline solution as an electrolyte and performs electrolysis using a porous diaphragm 10. In the process, the anode (oxidation electrode 20) undergoes a reaction in which hydroxide ions (OH⁻) of an alkali solution are oxidized to generate oxygen gas (O₂). The theoretical standard potential for this reaction is 0.401 V.

On the other hand, the cathode (reduction electrode 30) undergoes a reaction in which water (H₂O) is decomposed into hydrogen gas (H₂) and hydroxide ions (OH⁻). The theoretical standard potential for this reaction is -0.828 V. Therefore, the overall reactions are performed such that water (H₂O) is discomposed to produce hydrogen gas (H₂) and oxygen gas (O₂), with a theoretical standard potential of 1.229 V. In the process, cations and anions move to the cathode and the anode, respectively, through the diaphragm 10 to attain an ionic balance in which the concentration of cations and the concentration of anions are equalized due to the Donnan equilibrium.

The reaction formula and the theoretical standard potential difference of the alkaline water electrolysis of FIG. 1 are represented by Reaction Formula 1 shown below.

### [Reaction Formula 1]

Anodic reaction: 4OH⁻→ O₂ + 2H₂O + 4e⁻, E₀ = 0.401 V
Cathodic reaction: 4H₂O + 4e- → 2H₂ + 4OH-, E₀ = -0.828 V
Overall Reaction: 2H₂O → 2H₂ + O₂, E₀ = 1.229 V

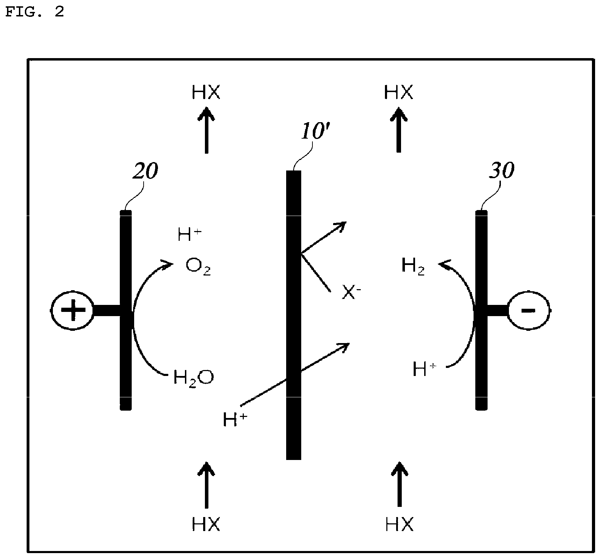

FIG. 2 is a schematic configuration diagram illustrating a conventional polymer electrolyte membrane electrolysis technique. Referring to FIG. 2, a polymer electrolyte membrane water electrolysis device uses an acidic solution as an electrolyte and performs electrolysis using a cation exchange membrane 10' as a diaphragm. In the process, the anode 20 undergoes a reaction in which water (H₂O) is decomposed into oxygen gas (O₂) and hydrogen ions (H⁺), with a theoretical standard potential of 1.229 V. At the cathode 30, hydrogen gas (H₂) is generated through the reaction of the hydrogen ions (H⁺), with a theoretical standard potential of 0.00 V. Therefore, the overall reactions produce hydrogen gas (H₂) and oxygen gas (O₂) through the decomposition of water (H₂O), with the same theoretical standard potential difference of 1.229 V as in the alkaline water electrolysis. During the reaction, since the cation exchange membrane 10' serving as a barrier is selectively permeable to cations, only cations can be moved to the cathode compartment from the anode compartment so that the overall ionic balance can be attained.

The electrolysis reaction and the theoretical standard potential difference of the polymer electrolyte membrane electrolysis of FIG. 2 are represented by Reaction Formula 2 shown below.

### [Reaction Formula 2]

Anodic reaction: 2H₂O → O₂ + 4H⁺ + 4e⁻, E₀ = 1.229V
Cathodic reaction: 4H⁺ + 4e⁻ → 2H₂, E₀ = -0.00V
Overall Reaction: 2H₂O → 2H₂ + O2, E₀ = 1.229V

The conventional electrolysis devices described above require an application voltage of 1.229 V per unit cell of water electrolysis. Therefore, when the number of unit cells for water electrolysis is increased, the power consumption correspondingly increases. Thus, the cost of electricity for water electrolysis considerably increases.

Therefore, the development of an improved low-power electrolysis device is urgently required.

### Disclosure

### Technical Problem

The present invention has been made to solve the problem occurring in the related art and an objective of the present invention is to provide an improved electrolysis device capable of reducing power consumption.

### Technical Solution

To accomplish the objective of the present invention, there is provided an electrolysis device for producing hydrogen and oxygen, the electrolysis device including: an anode installed in an anode compartment of an electrolytic cell; a cathode installed in a cathode compartment of the electrolytic cell; a diaphragm for separating the anode compartment and the cathode compartment from each other; an alkaline solution supply unit for supplying an alkaline solution as an electrolyte to the anode compartment; an acidic solution supply unit for supplying an acidic solution as an electrolyte to the anode compartment; and first and second outlets for discharging electrolyzed water from the anode compartment and the cathode compartment, respectively.

Hydroxide ions of the alkaline solution may generate oxygen gas through an electrode reaction in the anode compartment, and hydrogen ions of the acid solution may generate hydrogen gas through an electrode reaction in the cathode compartment.

This design dramatically reduces the power consumption of the electrolysis device.

Preferably, the diaphragm may include a porous diaphragm that allow transmission of cations and anions.

This allows cations in the anode compartment to move to the cathode compartment and anions in the cathode compartment to the anode compartment, thereby enabling an ionic balance between the anode compartment and the cathode compartment.

Preferably, the porous diaphragm may include a water decomposition catalyst embedded therein.

Accordingly, hydroxide ions and hydrogen ions produced through water decomposition may be provided to the anode compartment and the cathode compartment, resulting in an effective ionic balance.

In addition, the diaphragm may include any one ion exchange membrane selected from among a cation exchange membrane that is selectively permeable to cations and an anion exchange membrane that is selectively permeable to anions.

When the cation exchange membrane is used, the selective permeation property of the cation exchange membrane prevents anions in the cathode compartment from permeating into the anode compartment and allows cations in the anode compartment to permeate into the cathode compartment. The moved cations form a salt in the cathode compartment, resulting in an ionic balance being achieved.

When the anion exchange membrane is used, the selective permeation property of the anion exchange membrane prevents cations in the anode compartment from permeating into the cathode compartment and allows anions in the cathode compartment to permeate into the anode compartment. The moved anions form a salt in the anode compartment, resulting in an ionic balance being achieved.

In addition, preferably, one surface of the ion exchange membrane may be provided with a water decomposition catalyst layer.

Preferably, the cation exchange membrane may have the water decomposition catalyst layer on a surface thereof being in contact with the anode compartment and the anion exchange membrane may have the water decomposition catalyst layer on a surface thereof being in contact with the cathode compartment.

Hydroxide ions and hydrogen ions that are generated by the water decomposition catalyst layer reduce the consumption of the existing hydrogen ions and the existing hydroxide ions contained in the solutions, thereby making the ionic balance easily achieved.

Preferably, the diaphragm may include an anion exchange membrane disposed in the anode compartment so as to face the anode and a cation exchange membrane disposed in the cathode compartment so as to face the cathode. The cation exchange membrane and the anion exchange membrane may be adjacent to each other.

In addition, preferably, the diaphragm may further include a water decomposition catalyst layer disposed between the cation exchange membrane and the anion exchange membrane.

In this case, since there is no change in the electrolyte in each of the anode and cathode compartments, the electrolysis device can be continuously used without requiring the removal or treatment of salts.

Preferably, the water decomposition catalyst layer may be provided with an absorbent capable of absorbing water. In this case, water can be effectively absorbed by the water decomposition catalyst layer between the cation exchange membrane and the anion exchange membrane, so that the efficiency of water decomposition can be increased.

Preferably, the diaphragm may include an amphoteric ion exchange membrane into which a cation exchange membrane, an anion exchange membrane, and a water decomposition catalyst layer are integrated.

In this case, there is an advantage that the diaphragm can be easily manufactured, installed, and repaired or replaced.

In addition, the electrolysis device may further include an electrolyte regeneration unit capable of regenerating electrolyzed water produced in the electrolytic cell as the result of electrolysis and of replenishing hydroxide ions and hydrogen ions that are consumed through the electrolysis reactions respectively in the anode compartment and the cathode compartment.

In this case, since the electrolytes that are consumed through the electrolysis reactions can be regenerated, the electrolysis reactions can be continuously performed.

### Advantageous Effects

The electrolysis device according to the present invention can produce hydrogen gas and oxygen gas through anodic and cathodic reactions by supplying an alkaline solution and an acidic solution respectively to an anode compartment and a cathode compartment and can reduce power consumption by significantly lowering the overall standard potential for the anodic and cathodic reactions.

In addition, with the choice of a suitable diaphragm among a variety type of diaphragms and the optional addition of a catalyst later to the diaphragm, it is possible to produce oxygen and hydrogen while maintaining an ionic balance between the anode compartment and the cathode compartment.

In addition, there is an advantage in that the salts generated by the electrolysis reactions are converted into alkaline and acidic solutions through a separate process so as to be reused as electrolytes.

In addition, the use of an amphoteric ion exchange membrane as the diaphragm provides the advantage of inhibiting production of salts in the electrolyte. Therefore, the used electrolyzed water can be recycled without requiring an additional process of separating and treating salts.

### Description of Drawings

FIG. 1 is a schematic configuration diagram illustrating a conventional alkaline water electrolysis device;
FIG. 2 is a schematic configuration diagram illustrating a conventional polymer electrolyte membrane electrolysis device;
FIG. 3 is a schematic configuration diagram illustrating an electrolysis device according to a first embodiment of the present invention;
FIG. 4 is a schematic configuration diagram illustrating an electrolysis device according to a second embodiment of the present invention;
FIG. 5 is a schematic configuration diagram illustrating an electrolysis device according to a third embodiment of the present invention; and
FIG. 6 is a schematic configuration diagram illustrating an electrolysis device according to a fourth embodiment of the present invention.

### Best Mode

Hereinafter, the preferred embodiments of the present invention will be described in detail with reference to the accompanying drawings.

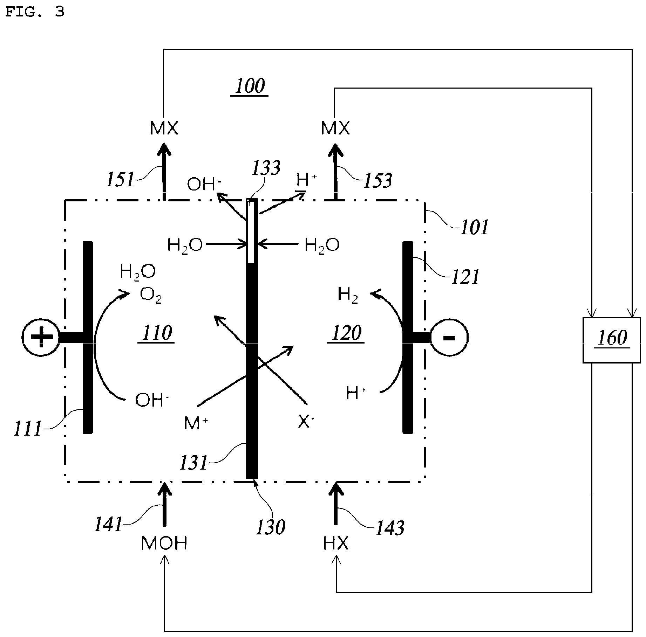

Referring to FIG. 3, an electrolysis device 100 according to a first embodiment of the present invention includes an electrolytic cell composed of an anode compartment 110 in which an anode 111 is installed, a cathode compartment 120 in which a cathode 121 is installed, and a diaphragm 130 separating the anode compartment 110 and the cathode compartment 120 from each other. The electrolysis device 100 further includes an alkaline solution supply unit 141 for supplying an alkaline solution as an electrolyte to the anode compartment 110, an acidic solution supply unit 143 for supplying an acidic solution as an electrolyte to the cathode compartment 120, and first and second outlets 151 and 153 for discharging electrolyzed water generated in the anode compartment 110 and the cathode compartment 120.

Specifically, the electrolysis device 100 is structured such that the body 101 of the electrolytic cell is divided into the anode compartment 110 and the cathode compartment 120 by the diaphragm 130. The anode 111 is installed in the anode compartment 110 and the cathode 121 is installed in the cathode compartment 120.

The diaphragm 130) is preferably implemented with a porous diaphragm 131 and is more preferably includes a catalyst layer 133 embedded therein for helping water decomposition.

Although the catalyst layer 133 is illustrated as being provided only in a portion of the porous diaphragm 131 in the drawings, it is only for convenience of representation. Preferably, the catalyst layer 133 is provided in the entire region of the porous diaphragm 131.

The alkaline solution supply unit 141 for supplying an alkaline solution as an electrolyte is connected to the anode compartment 110 and the acidic solution supply unit 143 for supplying an acidic solution as an electrolyte is connected to the cathode compartment 120. The anode compartment 110 and the cathode compartment 120 are respectively connected to the first and second outlets 151 and 153 to discharge the salts produced through the electrolysis.

In the electrolysis device 100 according to the first embodiment of the present invention, an anodic reaction represented by Reaction Formula 3 below occurs in the anode compartment 110, thereby generating oxygen gas (O₂). The theoretical standard potential for the anodic reaction is 0.401 V.

[Reaction Formula 3] 4OH⁻ → O₂ + 2H₂O + 4e⁻, E₀ = 0.401 V

On the other hand, a cathodic reaction represented by Reaction Formula 4 below occurs in the cathode compartment 120, thereby generating hydrogen gas. The theoretical standard potential for the cathodic reaction is 0.00 V.

[Reaction Formula 4] 4H⁺ + 4e⁻ → 2H₂, E₀ = 0.00V

The overall reaction is represented by Reaction Formula 5 shown below and the standard potential for the overall reaction is 0.401 V.

[Reaction Formula 5] 2H₂O → 2H₂ + O₂, E₀ = 0.401 V

Cations move to the cathode compartment 120 from the anode compartment 110 through the diaphragm 130, and anions move to the anode compartment 110 from the cathode compartment 120 through the diaphragm 130 so that an ionic balance can be achieved.

The catalyst layer 133 embedded in the diaphragm 130 decomposes water in the porous diaphragm 131 to produce hydroxide ions (OH⁻) and hydrogen ions (H⁺). The generated hydroxide ions (OH⁻) move to the anode compartment 110 and the generated hydrogen ions (H⁺) move to the cathode compartment 120, resulting in the ionic balance between the anode compartment 110 and the cathode compartment 120.

The salts generated in the anode compartment 110 and the cathode compartment 120 through the electrolysis reactions are expelled to the outside through the first and second outlets 151 and 153. The first and second outlets 151 and 153 serve as salt sources and the salts are sent to a process requiring the use of salts. Additionally, the generated salts may be converted into an acidic solution and an alkaline solution by a separate electrolyte regeneration unit 160 installed outside the electrolytic cell 101 and then supplied to the alkaline solution supply unit 141 and the acidic solution supply unit 143 for reuse.

The electrolyte regeneration unit 160 is a device for regenerating the salts generated to achieve the ionic balance back into an acidic solution and an alkaline solution. For electrolyte regeneration, various methods may be used: ion adsorption, electrolysis, electro dialysis, water decomposition electro dialysis, chemical reaction, and catalytic reaction. The electrolyte regeneration method used in the present invention is not particularly limited thereto, and any method can be used if it can convert salts into an acidic solution and an alkaline solution.

According to the present invention that has been described so far, oxygen and hydrogen are produced through electrolysis while an alkaline solution and an acidic solution are supplied to the anode compartment 110 and the cathode compartment 120, respectively. The overall theoretical standard potential required for the electrolysis is 0.401 V which is significantly lower than that of conventional techniques. Therefore, the power consumption required for electrolysis can be reduced so that the electrolysis can be cost-effectively performed. In addition, since the ionic balance between the anode compartment 110 and the cathode compartment 120 is maintained, electrolysis can be stably and continuously performed.

### Mode for Invention

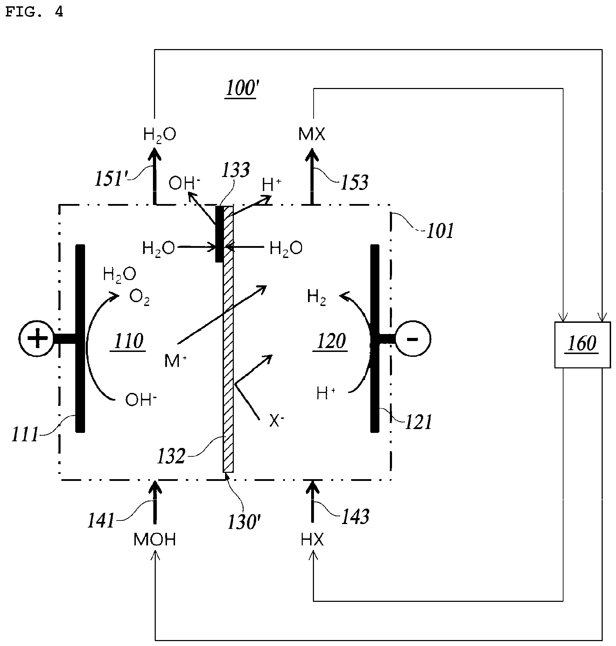

Referring to FIG. 4, an electrolysis device 100' according to a second embodiment of the present invention includes: an anode 111 installed in an anode compartment 110 of an electrolytic cell; a cathode 121 installed in a cathode compartment 120 of the electrolytic cell; a diaphragm 130' that separates the anode compartment 111 and the cathode compartment 121 from each other; an alkaline solution supply unit 141 for supplying an alkaline solution as an electrolyte to the anode compartment 110; an acidic solution supply unit 143 for supplying an acidic solution as an electrolyte to the cathode compartment 120; and first and second outlets 151' and 153 for discharging electrolyzed water generated in the anode compartment 110 and the cathode compartment 120, respectively.

The anodic reaction and the cathodic reaction performed respectively at the anode 111 and the cathode 121 are the same as in the first embodiment that has been described with reference to FIG. 3.

The diaphragm 130' includes a cation exchange membrane 132. The cation exchange membrane 132 allows cations to move from the anode compartment 110 to the cathode compartment 120 but blocks anions moving from the cathode compartment 120 to the anode compartment 110. The cations reaching the cathode compartment 120 after passing through the diaphragm 130' react with the anions in the cathode compartment 120 to form a salt, thereby maintaining the ionic balance.

The salt produced in the cathode compartment 120 is supplied to a salt-consuming process or an electrolyte regeneration unit 160 through the second outlet 153, along with the unreacted acidic solution that remains.

The first outlet 151' is a port for discharging an aqueous solution (H₂O) including the alkaline solution remaining in the anode compartment 110 after the electrolysis.

Preferably, one side surface of the cation exchange membrane 132 is provided with a catalyst layer 133. Preferably, the cation exchange membrane 132 has the catalyst layer 133 on a side surface thereof facing the anode compartment. Water undergoes a catalytic reaction in the catalyst layer 133, thereby producing hydroxide ions (OH⁻) and hydrogen ions (H⁺). The produced hydrogen ions (H⁺) move to the cathode compartment 120 through the cation exchange membrane, thereby supplementing hydrogen ions (H⁺) consumed through the cathodic reaction at the cathode 121. The produced hydroxide ions (OH⁻) cannot permeate through the cation exchange membrane and thus remain in the anode compartment 110, thereby supplementing hydroxide ions (OH-) consumed through the anodic reaction in the anode compartment 110. This can reduce or prevent the production of a salt formed by the ions that permeate into the cathode compartment 120 for electrolytic reactions and ionic balance. Therefore, the soundness of the solution can be maintained.

Although the catalyst layer 133 is illustrated as being provided only in a portion of the cation exchange membrane 132 in the drawings, this is for convenience of representation. Preferably, the catalyst layer 133 is provided over the entire area of the cation exchange membrane 132.

In addition, the alkaline solution supply unit 141 for supplying an alkaline solution as an electrolyte is connected to the anode compartment 110 and the acidic solution supply unit 145 for supplying an acidic solution as an electrolyte is connected to the cathode compartment 120.

In addition, the salt solution generated in the cathode compartment 120 and discharged through the second outlet 153 and the electrolyzed water discharged through the first outlet 151' are separately or collectively supplied to the electrolyte regeneration unit 160 disposed outside the electrolytic cell. Thus, the salt solution and/or the electrolyzed water may be regenerated into an acidic solution and an alkaline solution by the electrolyte regeneration unit 160 and then be returned to the electrolytic cell for reuse.

The electrolysis device 100' configured as described above, according to the second embodiment of the present invention, has a theoretical standard potential of 0.401 V for the anodic reaction and a standard potential of 0.00 V for the cathodic reaction. Accordingly, the standard potential for an overall reaction becomes 0.401 V, thereby significantly reducing the power consumption for electrolysis compared to conventional techniques.

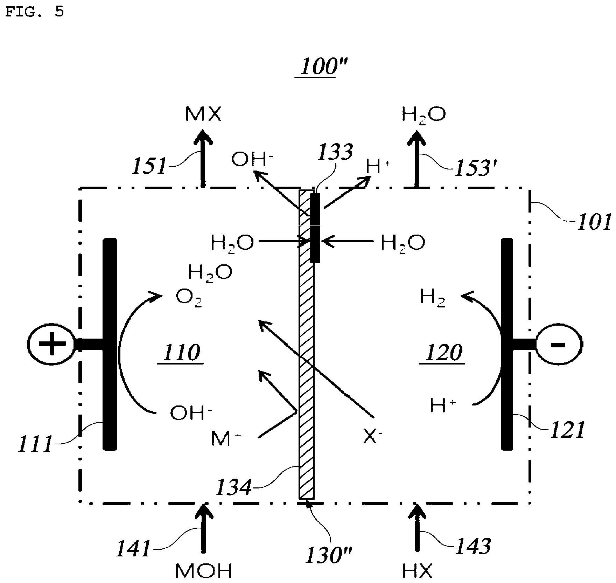

Referring to FIG. 5, an electrolysis device 100" according to a third embodiment of the present invention includes: an anode 111 installed in an anode compartment 110 of an electrolytic cell; a cathode 121 installed in a cathode compartment 120 of the electrolytic cell; a diaphragm 130" for separating the anode compartment 111 and the cathode compartment 121 from each other; an alkaline solution supply unit 141 for supplying an alkaline solution as an electrolyte to the anode compartment 110; an acidic solution supply unit 143 for supplying an acidic solution as an electrolyte to the cathode compartment 120; and first and second outlets 151 and 153' for discharging a salt and electrolyzed water generated in the anode compartment 110 and the cathode compartment 120, respectively.

The diaphragm 130" includes an anion exchange membrane 134. The anion exchange membrane 134 allows anions generated in the cathode compartment 120 to pass therethrough and permeate into the anode compartment 110 and prevents cations from moving from the anode compartment 110 to the cathode compartment 120. Thus, the anions having moved from the cathode compartment 120 to the anode compartment 110 react with the cations in the anode compartment 110 to form a salt.

Preferably, one side surface of the anion exchange membrane 134 is provided with a catalyst layer 133. In this embodiment, the anion exchange membrane 134 has the catalyst layer 133 on a side surface thereof facing the cathode compartment 120. The catalyst layer 133 decomposes water into hydroxide ions (OH⁻) and hydrogen ions (H⁺). The hydroxide ions (OH⁻) generated in the cathode compartment 120 by the catalyst layer 133 move to the anode compartment 110 through the anion exchange membrane 134, thereby supplementing hydrogen ions (H⁺) and hydroxide ions (OH⁻) consumed through the electrolysis reactions, thereby maintaining the soundness of the electrolyte solution.

The first outlet 151 is configured such the salt generated in the anode compartment 110 110 can be transferred to a salt-consuming process, and the second outlet 153' is configured to discharge electrolyzed water (H₂O) generated in the cathode compartment 120 to the outside.

In addition, the salt solution generated in the anode compartment 110 and discharged through the first outlet 151 and the electrolyzed water discharged through the second outlet 153' are separately or collectively supplied to the electrolyte regeneration unit 160 disposed outside the electrolytic cell. Thus, the salt solution and/or the electrolyzed water can be regenerated into an acidic solution and an alkaline solution by the electrolyte regeneration unit 160 and then be returned to the electrolytic cell for reuse.

The electrolysis device 100" illustrated in FIG. 5 also has a standard potential of 0.401 for the overall reaction, thereby significantly reducing power consumption compared to conventional techniques.

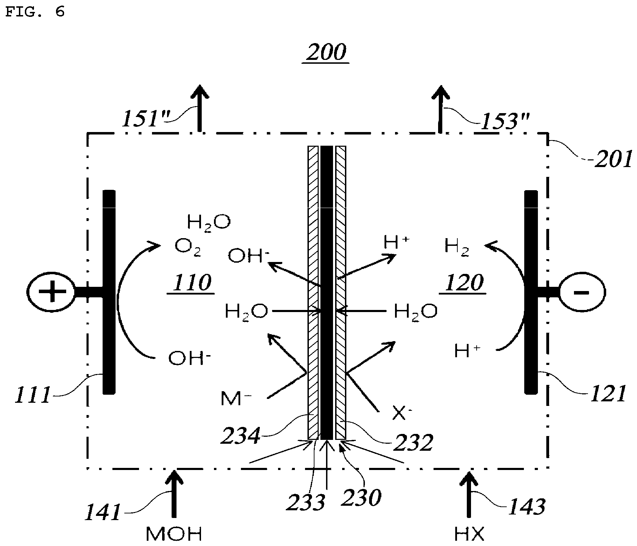

Referring to FIG. 6, an electrolysis device 200 according to a fourth embodiment of the present invention includes: an anode 111 installed in an anode compartment 110 of an electrolytic cell 201; a cathode 121 installed in a cathode compartment 120; a diaphragm 230 that separates the anode compartment 110 and the cathode compartment 120 from each other; an alkaline solution supply unit 141 for supplying an alkaline solution as an electrolyte to the anode compartment 110; an acidic solution supply unit 143 for supplying an acidic solution as an electrolyte to the cathode compartment 120; and first and second outlets 151" and 153" for discharging electrolyzed water from the anode compartment 110 and the cathode compartment 120, respectively.

The diaphragm 230 is equipped with a cation exchange membrane 232 installed to face the cathode compartment 120 and an anion exchange membrane 234 installed to face the anode compartment 110. Preferably, the diaphragm 230 further includes a catalyst layer 233 disposed between the cation exchange membrane 232 and the anion exchange membrane 234.

With this configuration, the same anodic reaction as described above occurs in the anode compartment 110 and the same cathodic reaction as described above occurs in the cathode compartment 120. These reactions disturb the ionic balance. For the electrolytic cell to recover from the ionic imbalance, cations in the anode compartment 110 and anions in the cathode compartment 120 attempt to move to the cathode compartment 110 and the anode compartment 120, respectively. However, the cations and anions cannot permeate through the ion exchange membranes 232 and 234 because of the selective permeation property of each of the ion exchange membranes 232 and 234.

On the other hand, water between the cation exchange membrane 232 and the anion exchange membrane 234 is decomposed into hydrogen ions (H⁺) and hydroxide ions (OH⁻), and the hydrogen ions (H⁺) and the hydroxide ions (OH⁻) move to the cathode compartment 120 and the anode compartment 110, respectively through the cation exchange membrane and the anion exchange membrane, respectively. Therefore, the ionic balance can be attained.

In this case, it is preferable that the catalyst layer 233 be interposed between the cation exchange membrane 232 and the anion exchange membrane 234. The catalyst layer 233 preferably contains an absorbent capable of absorbing water externally supplied.

The absorbent is a material having a high affinity for water (H₂O), and examples of the absorbent include: hydrophilic polymers such as Chitosan, poly(acrylamide)(PAM), poly(ethylene oxide) (PEO), poly(vinyl alcohol)(PVA), poly(vinylpyrrolidone)(PNVP), and poly(hydroxyethyl acrylate)(PHEA); inorganic hydrophilic materials such as silica gel and aerogel; and other hydrophilic chemical compounds. That is, materials that have a high absorptiveness for water (H₂O) while maintaining their shape can be used as the absorbent. Therefore, the catalyst layer 233 can absorb water and cause a more effective water decomposition reaction, resulting in the production of hydroxide ions (OH⁻) and hydrogen ions (H⁺) so that the ionic balance can be effectively attained.

Each of the catalyst layers 133 and 233 used in the first to fourth embodiments of the present invention is made of a hydroxide or oxide of a metal such as Fe or Cr. Alternatively, it is made of a hydroxide or oxygen of a metal selected from the group consisting of Pt, Pd, Rh, Kr, Re, Os, Ru, and Ni.

Preferably, in the basic form, the diaphragm 230 includes the cation exchange membrane 232 and the anion exchange membrane 234. The diaphragm 230 may further include a catalyst layer disposed between the cation exchange membrane 232 and the anion exchange membrane 234. Preferably, the diaphragm 230 is an integrated type in which the cation exchange membrane, the catalyst layer, and the anion exchange membrane are integrally formed to be a single body. In this case, the diaphragm 230 is called an amphoteric ion exchange membrane. Due to the integrated body, the diaphragm can be easily installed and have a compact size.

In addition, when the diaphragm is an amphoteric ion exchange membrane and is implemented as a single integrated body, the resistance across the diaphragm can be reduced during the cathodic and anodic reactions. In addition, since the state of the electrolyte does not change like in a conventional water electrolysis process, it is not necessary to separate and treat produced salts, and thus the electrolytes can be continuously used without the burden of salt removal and treatment.

In the electrolysis device 200 according to the fourth embodiment, which has the configuration described above, the cathodic reaction and the anodic reaction that are the same as described above are performed in the anode compartment 110 and the cathode compartment 120, respectively. In addition, since only a standard potential of 0.401 V is required for the overall reaction, the power consumption is reduced.

The alkaline solution supply unit 141 supplies an alkaline solution as an electrolyte to the anode compartment 110 and the acidic solution supply unit 143 supplies an acidic solution as an electrolyte to the cathode compartment 120. In addition, since the electrolytes supplied to the anode compartment 110 and the cathode compartment 120 do not change in quality. Therefore, additional salt removal and treatment processes are not necessary. The alkaline solution used for electrolysis in the anode compartment 110 is discharged through the first outlet 1351 and is then returned to the alkaline solution supply unit 141 for reuse. Likewise, the acidic solution used for electrolysis in the cathode compartment 120 is discharged through the second outlet 153 and is then returned to the acid solution supply unit 143 for reuse.

The electrolyzed water discharged through the first outlet 151" and the electrolyzed water discharged through the second outlet 153" may be regenerated into the alkaline solution and the acidic solution by the electrolyte regeneration unit 160 disposed outside the electrolytic cell, and the alkaline solution and the acidic solution that are produced by the electrolyte regeneration unit 160 may be supplied to the electrolytic cell to replenish the alkaline solution and the acidic solution for a case where the electrolytes are unintentionally reduced for some reasons.

As described above, since it is not necessary to separate and treat salts, the electrolysis device may have a simple structure and a compact size. In particular, since there is no need to separate a salt from an electrolyte or to treat the collected salt, the electrolytes can be continuously used, resulting in reduction of cost.

In addition, although not illustrated in FIGS. 5 and 6, the electrolysis device according to the present embodiment also includes the electrolyte regeneration unit 160 that regenerates the electrolyzed water into an alkaline solution and an alkaline solution so as to be returned to the electrolytic cell.

Although the present invention has been described in conjunction with the preferred embodiments and the accompanying drawings, the present invention should not be construed as being limited to the embodiments, and those skilled in the art will appreciate that various modifications, additions, and substitutions are possible, without departing from the scope and spirit of the invention as defined by the appended claims. Accordingly, such modifications or variations should not be construed as being independent of the spirit or idea of the present invention, and it is noted that the modifications or variations fall within the scope of the present invention.

## Claims

1. An electrolysis device for producing hydrogen and oxygen, the device comprising:
an anode installed in an anode compartment of an electrolytic cell;
a cathode installed in a cathode compartment of the electrolytic cell;
a diaphragm configured to separate the anode compartment and the cathode compartment from each other;
an alkaline solution supply unit configured to supply an alkaline solution as an electrolyte to the anode compartment;
an acidic solution supply unit configured to supply an acid solution as an electrolyte to the cathode compartment; and
first and second outlets configured to discharge electrolyzed water from the anode compartment and the cathode compartment, respectively,
wherein hydroxide ions of the alkaline solution generate oxygen through an electrode reaction in the anode compartment, and hydrogen ions of the acid solution generates hydrogen through an electrode reaction in the cathode compartment.

2. The device according to claim 1, wherein the diaphragm comprises a porous diaphragm allowing permeation of cations and anions.

3. The device according to claim 2, wherein the porous diaphragm comprises a water decomposition catalyst.

4. The device according to claim 1, wherein the diaphragm comprises an ion exchange membrane selected between a cation exchange membrane that is selectively permeable to cations or an anion exchange membrane that is selectively permeable to anions.

5. The device according to claim 4, wherein the ion exchange membrane comprises a water decomposition catalyst layer disposed on a first side surface of the ion exchange membrane.

6. The device according to claim 1, wherein the diaphragm comprises an anion exchange membrane positioned to face the anode in the anode compartment and a cation exchange membrane positioned to face the cathode in the cathode compartment, the cation exchange membrane and the anion exchange membrane being adjacent to each other.

7. The device according to claim 6, wherein the diaphragm further comprises a water decomposition catalyst layer disposed between the cation exchange membrane and the anion exchange membrane.

8. The device according to claim 7, wherein the water decomposition catalyst layer contains an absorbent capable of absorbing water.

9. The device according to claim 7 or 8, wherein the diaphragm comprises an amphoteric ion exchange membrane that is an integrated single body in which the cation exchange membrane, the water decomposition layer, and the anion exchange membrane are integrally formed.

10. The device according to any one of claims 1 to 8, further comprising an electrolyte regeneration unit configured to regenerate electrolyzed water produced through an electrolysis reaction and discharged from the electrolytic cell, thereby generating hydroxide ions and hydrogen ions that are used to replenish the hydroxide ions consumed in the anode compartment due to the electrolysis reaction and the hydrogen ions consumed in the cathode compartment due to the electrolysis reaction.
